# EUROPÄISCHE PATENTSCHRIFT

(11) **EP 2 868 980 B1**
(45) Veröffentlichungstag und Bekanntmachung des Hinweises auf die Patenterteilung: **16.03.2022**
(21) Anmeldenummer: 14184207.0
(22) Anmeldetag: 10.09.2014
(51) Int. Cl.: F24C 15/00, F24C 15/04, F21V 8/00

(54) **HAUSHALTSGERÄT AUFWEISEND EINE SICHTSCHEIBE**
HOUSEHOLD APPLIANCE COMPRISING A WINDOW
APPAREIL MÉNAGER COMPRENANT UN VITRE

(30) Priorität: 03.10.2013 ES 201331455
(43) Veröffentlichungstag der Anmeldung: 06.05.2015
(73) Patentinhaber: BSH Hausgeräte GmbH, 81739 München (DE)
(72) Erfinder: Galindo Perez, Juan Jose, 50007 Zaragoza (ES); Obon Abadia, Carlos, 50008 Zaragoza (ES); Soguero Escuer, Joaquin, 50002 Zaragoza (ES)

(56) Entgegenhaltungen:
- EP-A1- 2 787 282
- DE-A1- 10 347 763
- DE-A1-102005 057 154
- DE-A1-102007 058 944

## Beschreibung

Die Erfindung betrifft ein Haushaltsgerät mit einem Behandlungsraum und einer den Behandlungsraum abdeckenden Sichtscheibe für den Behandlungsraum des Haushaltsgeräts, insbesondere eines Ofens. Die Sichtscheibe mag insbesondere eine Scheibe einer Ofentür sein.

EP 2 085 702 A2 offenbart ein Hausgerät, insbesondere ein Kochfeld, mit einer Markierung und mit einer Beleuchtungsanordnung, aufweisend eine Abdeckplatte aus einem transparenten oder semitransparenten Material und einer im Inneren und/oder auf einer Oberfläche der Abdeckplatte angebrachten Markierung und mit einer Beleuchtungsanordnung zum Hinterleuchten der Markierung. Um eine homogene Ausleuchtung der Markierung zu erreichen, wird vorgeschlagen, dass die Beleuchtungsanordnung ein Illuminationsmittel zum Hinterleuchten der Markierung von einer Rückseite der Abdeckplatte aus umfasst. Die Markierung kann als Lasergravur ausgebildet sein, insbesondere als dreidimensionale Laser-Innengravur. Die Beleuchtungsanordnung mag Mittel zum Hinterleuchten der Markierung in wenigstens zwei unterschiedlichen Farben aufweisen. Das Hausgerät mag dazu eine Steuereinheit zum Betätigen der Beleuchtungsanordnung aufweisen, wobei die Steuereinheit dazu ausgelegt ist, eine Intensität und/oder Farbe der Beleuchtung abhängig von einem Betriebszustand des Hausgeräts zu bestimmen.

WO 2011/131340 A1 offenbart ein Kochfeld mit einer Beleuchtungsausrüstung. Das Kochfeld weist zumindest eine an der Oberseite des Kochfelds angeordnete transparente oder semitransparente Kochfeldplatte auf. Ferner umfasst das Kochfeld zumindest einen die Kochfeldplatte zumindest teilweise umschließenden Rahmen. Eine Vielzahl von Beleuchtungselementen ist innerhalb des Rahmens angeordnet, und zwar neben einer Schmalseite der Kochfeldplatte. Der Rahmen weist mindestens eine Öffnung mindestens an einer Innenseite des Rahmens auf, so dass das Kochfeld und / oder die Umgebung oberhalb des Kochfelds aus dem Rahmen heraus beleuchtet werden.

DE 10318 861 A1 offenbart ein Gargerät mit einem Garraum und einer Gargerätetür zum Schließen des Garraums sowie einer Beleuchtungseinrichtung zum Beleuchten des Garraums, die zumindest einen Reflektor aufweist, der in einem Türinnenraum der Gargerätetür angeordnet ist und das Licht einer Lichtquelle der Beleuchtungseinrichtung in den Garraum reflektiert, wobei der Reflektor einen zum Garraum lichtdurchlässigen Lichtführungsraum türinnenraumseitig begrenzt.

DE 10 2005 045 367 A1 offenbart eine Innenraumbeleuchtungsvorrichtung für ein Gargerät mit einer Beleuchtungseinheit zum Einstrahlen von Beleuchtungslicht in einen Innenraum des Gargeräts, wobei die Beleuchtungseinheit zumindest eine Leuchtdiode umfasst.

DE 10 2005 057154 A1 offenbart ein Haushaltsgerät, umfassend einen mit einer Lichtquelle beleuchtbaren Innenraum, der von Wänden und einer Tür umgeben ist, wobei der Innenraum mit einer Lichtquelle von der Tür her beleuchtet wird, insbesondere wobei die Tür mindestens eine Glasfläche aufweist, Licht von der Lichtquelle in die Glasfläche von einem Rand her eingekoppelt wird, so dass das Licht zumindest teilweise in der Glasfläche geführt wird, und die Glasfläche Elemente aufweist, durch die ein Teil des in der Glasfläche geführten Lichts in den Innenraum hineingeleitet wird. Die Erfindung zeichnet sich dadurch aus, dass durch die Beleuchtung des Innenraums von der Tür her, d. h. von vorne, eine für den Nutzer des Haushaltsgeräts besonders günstige Beleuchtung geschaffen wird, die ein silhouettenhaftes Erscheinungsbild von in dem Innenraum befindlichen Waren vermeidet.

DE 103 47 763 A1 geht aus von einer Haushaltsgeräteeinheit mit einem zumindest teilweise aus einem transparenten Material gefertigten Bauteil, insbesondere einer Türscheibe, und mit einem optischen Funktionsmittel. Um das Haushaltsgeräteeinheit bereitzustellen, wird vorgeschlagen, dass das optische Funktionsmittel zumindest teilweise von einem im Inneren des transparenten Materials angeordneten Lichtstreubereich gebildet ist.

DE 10 2007 058 944 A1 betrifft ein Gargerät mit einem durch Wände begrenzten und eine Beschickungsöffnung aufweisenden Garraum, einer Tür zum Schließen der Beschickungsöffnung und einer Beleuchtungseinrichtung zum Beleuchten des Garraums, welche zumindest eine Lichtquelle umfasst, deren emittiertes Licht über Reflexionsflächen in der Tür in den Garraum einleitbar ist, und vor dem Eintritt des Lichts in den Garraum ein der Tür zugeordnetes lichtdurchlässiges Element im Strahlengang des Lichts angeordnet ist, wobei zumindest bereichsweise auf dem lichtdurchlässigen Element eine das Licht in den Garraum streuende Schicht ausgebildet ist.

DE 10 2013 205 824 A1 und EP 2 787 282 A1 betreffen eine Beleuchtungsvorrichtung zum Beleuchten eines Innenraums eines Haushaltsgeräts, mit zumindest einer Lichtquelle, wobei die Beleuchtungsvorrichtung eine Scheibe einer Tür zum Verschließen des Innenraums als Lichtleiter aufweist, in welche das Licht der Lichtquelle über zumindest eine Einkoppelseite der Scheibe in diese Scheibe einkoppelbar ist, und an einer dem Innenraum abgewandten Oberfläche der Scheibe zumindest ein Lichtumlenkelement angeordnet ist, mit welchem das in die Scheibe eingekoppelte Licht auf die dem Innenraum zugewandte Oberfläche der Scheibe umlenkbar und aus dieser zugewandten Oberfläche aus der Scheibe in den Innenraum auskoppelbar ist. Die Erfindung betrifft auch ein Haushaltsgerät mit einer Beleuchtungsvorrichtung.

Es ist die **Aufgabe** der vorliegenden Erfindung, die Nachteile des Standes der Technik zumindest teilweise zu überwinden und insbesondere eine vereinfachte, aber effektive Möglichkeit zur Beleuchtung eines Behandlungsraums eines Haushaltsgeräts, insbesondere eines Ofens, aus einem Bereich einer Sichtscheibe bereitzustellen.

Diese Aufgabe wird gemäß den Merkmalen des unabhängigen Anspruchs gelöst. Bevorzugte Ausführungsformen sind insbesondere den abhängigen Ansprüchen entnehmbar. Die Aufgabe wird gelöst durch ein Haushaltsgerät, aufweisend einen Behandlungsraum, der eine Beschickungsöffnung aufweist, und eine Tür zum Verschließen der Beschickungsöffnung, die mindestens eine Sichtscheibe aufweist, wobei die die Sichtscheibe eine kantenseitig beleuchtete Haushaltsgeräte-Sichtscheibe ist und mindestens einen lichtstreuenden Lichtauskopplungsbereich aufweist.

Erfindungsgemäß weist die Sichtscheibe ferner an einer dem Behandlungsraum abgewandten Seite mindestens eine nach innen reflektierende Beschichtung auf, die zumindest einen Lichtauskopplungsbereich überdeckt. Dadurch kann eine Helligkeit bzw. ein Lichtstrom des an der dem Behandlungsraum zugewandten Seite der Scheibe verstärkt werden. Bei dieser Ausgestaltung wird ausgenutzt, dass Licht an einem Streuzentrum des Lichtauskopplungsbereichs auch an die dem Behandlungsraum abgewandte Seite der Sichtscheibe gestreut werden kann. Durch die nach innen Innen reflektierende Beschichtung wird dieses Licht wieder zurück in die Scheibe geworfen und kann dadurch an der zur Beleuchtung des Behandlungsraums vorgesehenen, dem Behandlungsraum zugewandten Seite der Scheibe in den Behandlungsraum abgestrahlt werden.

Ferner ist der mindestens eine überdeckte Lichtauskopplungsbereich ein gravierter Bereich. Durch die Gravur werden in dem Material der Scheibe Streuzentren für das in der Scheibe geführte Licht erzeugt, welche Streuzentren das Licht nach außen ablenken können.

Diese Sichtscheibe weist den Vorteil auf, dass sie einfach und preiswert herstellbar ist. Die Sichtscheibe braucht insbesondere nicht aus mehreren Teilen zusammengesetzt zu werden. Der lichtstreuende Lichtauskopplungsbereich ist vielmehr ein integraler Bestandteil der Sichtscheibe und ist insbesondere nicht zuvor separat hergestellt und danach erst mit der Sichtscheibe verbunden worden. Der lichtstreuende Lichtauskopplungsbereich ermöglicht zudem eine effektive Lichtauskopplung von in der Sichtscheibe ansonsten im Wesentlichen verlustfrei geführten Lichts. Durch die grundsätzlich freie Formung und Positionierung des Lichtauskopplungsbereichs lässt sich ferner eine hohe Designvariabilität und gezielte Anpassung der Form der Lichteinstrahlung in den Behandlungsraum erreichen. Eine solche Sichtscheibe ist zudem widerstandsfähig und langlebig.

Unter einer "Sichtscheibe" kann jede Scheibe verstanden werden, welche einen Einblick in den Behandlungsraum ermöglicht und/oder dazu vorgesehen ist. Die Sichtscheibe ist insbesondere nicht hohl, sondern vollvolumig.

An mindestens einer Kante oder mindestens einem Kantenabschnitt eingestrahltes oder eingekoppeltes Licht wird in der Sichtscheibe durch innere Totalreflexion an deren Oberflächen weitgehend verlustfrei geführt. Die Sichtscheibe mag folglich insbesondere als ein Lichtleitkörper, insbesondere als ein TIR (Totale Innere Reflexion)-Körper, angesehen oder bezeichnet werden. Durch den lichtstreuenden Lichtauskopplungsbereich wird das in der Sichtscheibe laufende Licht jedoch so auf deren Oberfläche abgelenkt, dass die Winkelbedingung für die innere Totalreflexion nicht mehr gilt und das so auftreffende Licht aus der Sichtscheibe austreten kann. Durch einen lichtstreuenden Lichtauskopplungsbereich kann also gezielt mindestens ein Oberflächenbereich der Sichtscheibe mit einer starken Lichtausstrahlung bereitgestellt werden. Das von diesem Oberflächenbereich abgestrahlte Licht dient der Belichtung des Behandlungsraums.

Als Scheibe mag insbesondere jeder Körper mit einer geringen, insbesondere konstanten, Dicke gelten. Die Scheibe mag auch als Platte oder plattenförmiger Körper angesehen werden. Die Scheibe mag z.B. eine quaderförmige Scheibe bzw. eine frontseitig rechteckig geformte Scheibe sein, sie ist jedoch nicht darauf beschränkt. Die Scheibe mag eine ebene Scheibe oder eine gekrümmte Scheibe sein. Insbesondere ist die Scheibe vertikal aufgestellt oder ausgerichtet, und zwar insbesondere zumindest bei einem Betrieb des Haushaltsgeräts.

Es ist eine Weiterbildung, dass die Scheibe eine transparente Scheibe ist. Dies ermöglicht eine gute Durchsicht durch die Scheibe ("Bild-" oder "Blickdurchlässigkeit") und einen geringen, insbesondere praktisch vernachlässigbaren, Lichtverlust von Licht aus der Sichtscheibe, welches nicht an dem lichtstreuenden Lichtauskopplungsbereich gestreut worden ist.

Die Scheibe mag einen oder mehrere zum Lichteintritt vorgesehene Kantenabschnitte aufweisen. Die Scheibe mag zudem mindestens einen Kantenabschnitt aufweisen, welche nicht für einen Lichteintritt noch zum Lichtaustritt vorgesehen ist. Ein solcher Kantenabschnitt mag zur Verringerung eines Lichtverlusts insbesondere nach innen reflektierend ausgebildet sein, z.B. mittels einer reflektierenden Beschichtung.

Es ist eine weitere Ausgestaltung, dass die Scheibe mittels eines Rahmens gehalten wird. Der Rahmen mag beispielsweise einen U-förmigen Querschnitt aufweisen oder als ein Profil mit einem U-förmigen Querschnitt ausgebildet sein. Die mindestens eine Lichtquelle mag zur effektiven Lichteinstrahlung in die Scheibe insbesondere an einem Grund des U-förmigen Rahmens angeordnet sein. Der Rahmen mag ein umlaufender oder teilweise umlaufender Rahmen sein. Der Rahmen mag auch eine geradlinige Schiene sein.

Es ist eine Weiterbildung, dass die Gravur eine Lasergravur ist, also mittels eines Lasers erzeugt worden ist. Dabei wird das Material der Scheibe durch einen Laserstrahl so stark erhitzt, dass es sich thermisch kontrasterzeugend verändert, verdampft oder verbrennt. Die Lasergravur ist allgemein bekannt und weist unter anderem die Vorteile einer einfachen Handhabung und Bearbeitung der Scheibe auf.

Es ist noch eine Ausgestaltung, dass mindestens ein Lichtauskopplungsbereich ein dem Behandlungsraum zugewandter Oberflächenbereich ist. Ein solcher Lichtauskopplungsbereich reicht in anderen Worten bis zur Oberfläche der Scheibe. Ein solcher Lichtauskopplungsbereich weist den Vorteil auf, dass er eine direkte und damit besonders effektive Lichtabstrahlung aus der Scheibe ermöglicht.

Es ist eine Weiterbildung, dass der Oberflächenbereich im Wesentlichen nur an der Oberfläche der Scheibe vorhanden ist und eine praktisch vernachlässigbare Eindringtiefe in die Scheibe aufweist. Ein solcher Lichtauskopplungsbereich lässt sich besonders einfach herstellen.

Es ist noch eine Weiterbildung, dass der Oberflächenbereich eine praktisch nicht vernachlässigbare Eindringtiefe oder Ausdehnung in die Scheibe aufweist. Ein solcher Lichtauskopplungsbereich weist ein größeres Lichtstreuvolumen auf als ein rein oberflächlicher Lichtauskopplungsbereich und ermöglicht eine Abstrahlung von Licht mit einem größeren Lichtstrom.

Es ist noch eine weitere Ausgestaltung, dass mindestens ein Lichtauskopplungsbereich ein im Inneren der Scheibe positionierter Bereich ist. Ein solcher Lichtauskopplungsbereich ist also ein rein "innerer" Lichtauskopplungsbereich und reicht nicht bis zur Oberfläche der Scheibe. Dies ermöglicht einen Schutz des Lichtauskopplungsbereichs, z.B. vor einer Verschmutzung oder Abrieb.

Es ist eine Weiterbildung, dass die Scheibe aus Glas besteht. Glas ist temperaturbeständig und einfach zu gravieren.

Es ist eine Weiterbildung davon, dass der Lichtauskopplungsbereich mittels einer in-Glas-Gravur oder Glasinnengravur hergestellt worden ist.

Es ist noch eine Weiterbildung davon, dass die Scheibe aus Borosilikatglas besteht. Borosilikatglas weist den Vorteil auf, dass es hochtemperaturbeständig ist und zudem ausreichend widerstandsfähig ist, um darin Streuzentren durch Gravur, insbesondere Lasergravur, zu erzeugen. Jedoch kann auch jedes andere geeignete Glas oder Glaskeramik verwendet werden.

Die reflektierende Beschichtung mag z.B. eine aufgedampfte Metallschicht oder eine reflektierende Folie sein.

Es ist auch eine Ausgestaltung, dass der mindestens eine Lichtauskopplungsbereich randseitig an einem Sichtbereich der Sichtscheibe angeordnet ist. Dadurch kann ein Nutzer oder Bediener des Haushaltsgeräts durch die Sichtscheibe in den Behandlungsraum sehen, ohne durch den mindestens einen Lichtauskopplungsbereich gestört zu werden.

Der mindestens eine Lichtauskopplungsbereich ist insbesondere in Frontalansicht streifenförmig. Er mag sich insbesondere entlang eines größten Teils (insbesondere von mehr als 50%, insbesondere von mehr als 75% der Länge) des benachbarten Rands des Sichtbereichs erstrecken.

Es ist eine Weiterbildung, dass der mindestens eine Lichtauskopplungsbereich an einer dem Behandlungsraum abgewandten Seite mittels einer Sichtschutzeinrichtung blickdicht abgedeckt ist. So mag eine höherwertige Anmutung erreicht werden. Die Sichtschutzeinrichtung mag beispielsweise eine Bedruckung oder eine Blende sein. Die Sichtschutzeinrichtung mag an der Sichtscheibe angebracht sein oder davon beabstandet angeordnet sein.

Es ist eine Ausgestaltung, dass das Haushaltsgerät ein Gargerät ist, welches als Behandlungsraum einen Garraum aufweist, und die Sichtscheibe eine Scheibe einer Garraumtür ist. Der Garraum mag insbesondere ein Ofen mit einem Garraum in Form eines Ofenraums und einer Garraumtür in Form einer Ofentür sein. Der Ofen mag insbesondere ein Backofen sein. Der Garraum mag aber zusätzlich oder alternativ ein Mikrowellengerät und/ ein Dampfgargerät sein. Jedoch ist das Haushaltsgerät nicht darauf beschränkt und mag beispielsweise eine Waschmaschine, ein Wäschetrockner, ein Sterilisator usw. sein.

Insbesondere für den Fall, dass das Haushaltsgerät einen Backofen aufweist, mag die Sichtscheibe eine den Garraum begrenzende innere Scheibe eines mehrere Scheiben aufweisenden Scheibenpakets der Gargerätetür bzw. Backofentür sein. Dies erlaubt eine besonders effektive Beleuchtung des Garraums ohne Rückreflexion des von der Sichtscheibe abgestrahlten Lichts von anderen Scheiben.

Die Art der mindestens einen Lichtquelle ist grundsätzlich nicht beschränkt. Bevorzugterweise weist die mindestens eine Lichtquelle mindestens eine Halbleiterlichtquelle auf. Es ist folglich eine Ausgestaltung, dass das Haushaltsgerät mindestens eine Halbleiterlichtquelle aufweist, deren Licht in mindestens eine Kante der Sichtscheibe einstrahlbar ist. Bevorzugterweise umfasst die mindestens eine Halbleiterlichtquelle mindestens eine Leuchtdiode. Bei Vorliegen mehrerer Leuchtdioden (LEDs) können diese in der gleichen Farbe oder in verschiedenen Farben leuchten. Eine Farbe kann monochrom (z.B. rot, grün, blau usw.) oder multichrom (z.B. weiß) sein. Mehrere Leuchtdioden können ein Mischlicht erzeugen; z.B. ein weißes Mischlicht. Die mindestens eine Leuchtdiode kann mindestens einen wellenlängenumwandelnden Leuchtstoff enthalten (Konversions-LED). Der Leuchtstoff kann alternativ oder zusätzlich entfernt von der Leuchtdiode angeordnet sein ("Remote Phosphor"). Die mindestens eine Leuchtdiode kann in Form mindestens einer einzeln gehäusten Leuchtdiode oder in Form mindestens eines LED-Chips vorliegen. Mehrere LED-Chips können auf einem gemeinsamen Substrat ("Submount") montiert sein. Die mindestens eine Leuchtdiode kann mit mindestens einer eigenen und/oder gemeinsamen Optik zur Strahlführung ausgerüstet sein, z.B. mindestens einer Fresnel-Linse, Kollimator, und so weiter. Anstelle oder zusätzlich zu anorganischen Leuchtdioden, z.B. auf Basis von InGaN oder AllnGaP, sind allgemein auch organische LEDs (OLEDs, z.B. Polymer-OLEDs) einsetzbar. Alternativ kann die mindestens eine Halbleiterlichtquelle z.B. mindestens einen Diodenlaser aufweisen. Jedoch können grundsätzlich auch andere Lichtquellen verwendet werden wie Kompakt-Leuchtstoffröhren usw.

Die mindestens eine Lichtquelle mag mit einer Treiberelektronik zu ihrem Betrieb elektrisch verbunden sein. Die Treiberelektronik mag zusammen mit der mindestens einen Lichtquelle eine Leuchtvorrichtung bilden. Die Leuchtvorrichtung mag beispielsweise durch eine Steuereinrichtung des Haushaltsgeräts steuerbar sein, z.B. zur Einstellung einer Helligkeit und/oder einer Farbe des von der mindestens einen Lichtquelle abgestrahlten Lichts. Die Treiberelektronik mag alternativ oder zusätzlich einen Teil der Steuereinrichtung des Haushaltsgeräts darstellen bzw. eine Funktion der Steuereinrichtung sein.

Da die Kanten einer Scheibe typischerweise eine längliche Ausdehnung aufweisen, wird es bevorzugt, dass die mindestens eine Lichtquelle an einem jeweiligen zum Lichteintritt bzw. zu einer Lichteinkopplung vorgesehenen Kantenabschnitt mehrere in Reihe angeordnete Lichtquellen, insbesondere Halbleiterlichtquellen, aufweist. Die Lichtquellen mögen insbesondere auf einem gemeinsamen bandförmigen Substrat angeordnete Halbleiterlichtquellen, insbesondere Leuchtdioden, aufweisen. Das Substrat mag insbesondere eine flexible oder starre Leiterplatte sein. Solche auch als "Leuchtbänder" bezeichneten Leuchtvorrichtungen sind beispielsweise von der Firma Osram unter dem Namen "LINEARlight" erhältlich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung von Ausführungsbeispielen, die im Zusammenhang mit den Zeichnungen näher erläutert werden. Dabei können zur Übersichtlichkeit gleiche oder gleichwirkende Elemente mit gleichen Bezugszeichen versehen sein.
- Fig.1: zeigt als Schnittdarstellung in Seitenansicht ein erfindungsgemäßes Haushaltsgerät mit einer Sichtscheibe gemäß einem ersten Ausführungsbeispiel;
- Fig.2: zeigt als Schnittdarstellung in Seitenansicht die Sichtscheibe der Fig.1 in höherer Detaillierung;
- Fig.3: zeigt das Haushaltsgerät aus Fig.1 in einer Frontansicht; und
- Fig.4: zeigt eine Sichtscheibe gemäß einem zweiten Ausführungsbeispiel.

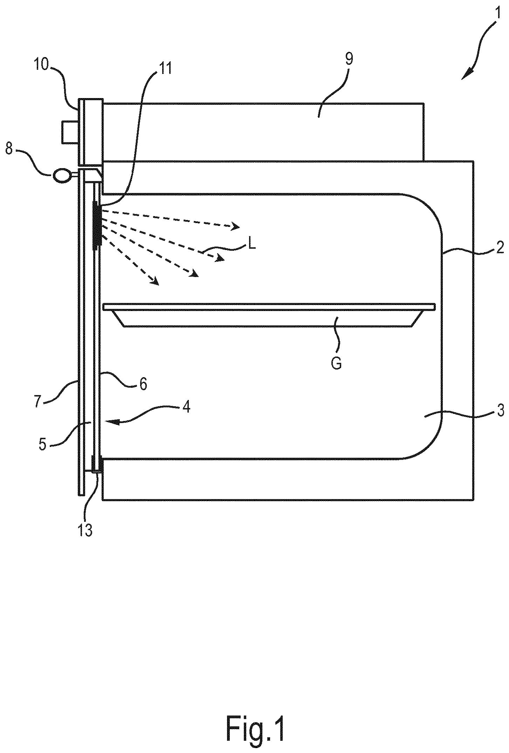

**Fig.1** zeigt als Schnittdarstellung in Seitenansicht ein Haushaltsgerät in Form eines Backofens 1. Der Backofen 1 weist einen durch eine Ofenmuffel 2 begrenzten Speisenbehandlungsraum in Form eines Garraums 3 auf. Die Ofenmuffel 2 weist vorderseitig eine Beschickungsöffnung 4 auf. Die Beschickungsöffnung 4 ist mittels einer Backofentür 5 verschließbar. Die Backofentür 5 weist ein Scheibenpaket 6, 7 mit einer inneren Sichtscheibe 6 und einer äußeren Sichtscheibe 7 auf. Außenseitig ist die Backofentür 5 mittels eines Türgriffs 8 handhabbar. Oberhalb der Ofenmuffel 2 befindet sich eine Steuerelektronik 9 mit einer Bedienblende 10.

Die innere Sichtscheibe 6 und die äußere Sichtscheibe 7 sind hier als transparente, quaderförmige Glasscheiben ausgebildet. Zumindest die bei Betrieb des Backofens 1 höheren Temperaturen ausgesetzte innere, den Garraum 3 direkt begrenzende Sichtscheibe 6 besteht aus Borosilikatglas.

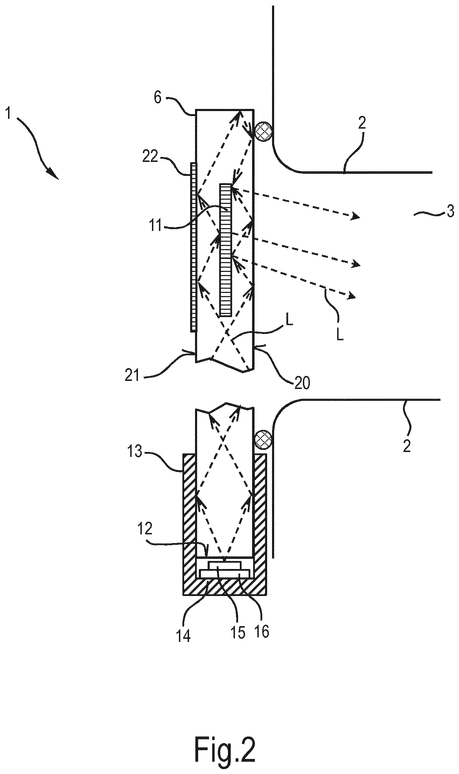

Wie auch genauer in **Fig.2** gezeigt, weist die innere Sichtscheibe 6 einen lichtstreuenden Lichtauskopplungsbereich 11 zum Auskoppeln bzw. Einstrahlen von Licht L in den Garraum 3 auf. Das Licht L wird durch eine untere Kante oder unteren Kantenabschnitt 12 in die innere Sichtscheibe 6 eingekoppelt, welche somit eine kantenseitig beleuchtete

Sichtscheibe 6 ist. Der untere Kantenabschnitt 12 ist in eine Halterung in Form einer im Querschnitt U-förmigen Profilschiene 13 eingesetzt. Ein Boden 14 der Profilschiene 13 ist beabstandet zu dem unteren Kantenabschnitt 12 angeordnet und trägt mehrere Leuchtdioden (LEDs) 15. Dazu sind die mehreren LEDs 15 in einer sich senkrecht zur Bildebene erstreckenden Reihe angeordnet, und zwar auf einem Substrat in Form einer bandförmigen Leiterplatte 16. Die Leiterplatte 16 mit den darauf angeordneten LEDs 15 mag als einheitliches Leuchtband 15, 16 käuflich erhältlich sein. Die LEDs 15 mögen gleichfarbige, z.B. weiße, LEDs sein oder mögen Gruppen verschiedenfarbiger LEDs umfassen, welche in Summe ein z.B. weißes Mischlicht L erzeugen können. Die LEDs 15 mögen über die Leiterplatte 16 mit der Steuerelektronik 9 verbunden sein, um z.B. aktiviert zu werden. Auf der Leiterplatte 16 oder damit verbunden mag eine Treiberelektronik (o. Abb.) zum Betreiben der LEDs 15, insbesondere zur Einstellung eines Betriebsstroms und/oder einer Betriebsspannung der LEDs 15, vorhanden sein. Die Profilschiene 13 mag zur Verringerung von Lichtverlusten innenseitig reflektierend ausgestaltet sein.

Die LEDs 15 strahlen bei ihrem Betrieb das von ihnen emittierte Licht L auf den unteren Kantenabschnitt 12. Das Licht L tritt dann durch den unteren Kantenabschnitt 12 in die Sichtscheibe 6 ein und wird in der Sichtscheibe 6 durch innere Totalreflexion geführt. Trifft das Licht L auf einen lichtstreuenden Lichtauskopplungsbereich 11, wird es dort gestreut. Durch die Streuung kann die Richtung des Lichts L geändert werden und es kann so insbesondere in einem Winkel auf eine Oberfläche der Sichtscheibe 6 treffen, unter welchem die Bedingung für die innere Totalreflexion nicht mehr gegeben ist. Dadurch wird das Licht L aus der Sichtscheibe 6 ausgekoppelt.

Das an dem lichtstreuenden Lichtauskopplungsbereich 11 gestreute Licht L wird besonders stark in eine rückwärtige Richtung auf eine rückwärtige, dem Garraum 3 zugewandte Seitenfläche 20 der Sichtscheibe 6 und in eine frontseitige Richtung auf eine vorderseitige, dem Garraum 3 abgewandte Seitenfläche 21 der Sichtscheibe 6 geworfen. Um eine besonders effektive Beleuchtung des Garraums 3 zu erreichen, ist an der vorderseitigen Seitenfläche 21 der Sichtscheibe 6 eine nach innen reflektierende Beschichtung 22 vorhanden, z.B. eine spiegelnde Metallfolie. Die reflektierende Beschichtung 22 überdeckt den lichtstreuenden Lichtauskopplungsbereich 11 bei frontaler Betrachtung der Sichtscheibe 6 und ragt auch seitlich darüber hinaus. Sie reflektiert an dem lichtstreuenden Lichtauskopplungsbereich 11 auf sie gestreutes Licht L zurück in den Lichtauskopplungsbereich 11 oder direkt auf die Seitenfläche 20.

Folglich wird ein größter Teil des an dem lichtstreuenden Lichtauskopplungsbereich 11 gestreuten Lichts L durch die rückwärtige Seitenfläche 20 in den Garraum 3 ausgekoppelt und beleuchtet diesen. Es wird bevorzugt mindestens 70% des aus der Sichtscheibe 6 ausgekoppelten Lichts L in den Garraum 3 eingestrahlt, insbesondere mindestens 80%, insbesondere mindestens 90%.

Der lichtstreuenden Lichtauskopplungsbereich 11 ist hier ein mittels einer Laserinnengravur im Inneren der vollvolumigen (also nicht hohlen) Sichtscheibe 6 erzeugter Bereich, und zwar ohne dass er eine Oberfläche der Sichtscheibe 6 erreicht.

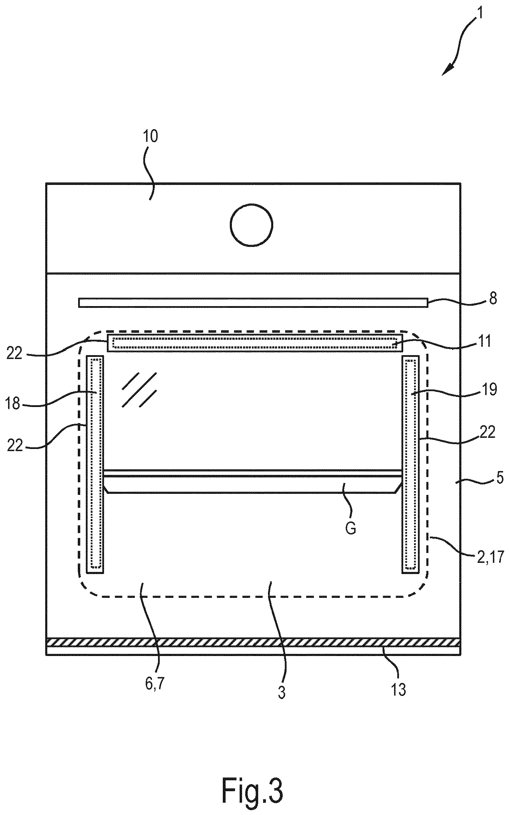

**Fig.3** zeigt den Backofen aus Fig.1 in einer Frontansicht. Die in dieser Sicht seitliche Begrenzung des Garraums 3, welche der Lage der Seitenwände der Ofenmuffel 2 entspricht, ist hier gestrichelt dargestellt. Dies entspricht auch einem möglichen Sichtbereich 17 der Sichtscheiben 6 und 7. Die innere Sichtscheibe 6 weist drei lichtstreuende Lichtauskopplungsbereiche auf, nämlich den oben beschriebenen Lichtauskopplungsbereich 11, der sich an einem oberen Rand des Sichtbereichs 17 befindet, einen sich an einem linksseitigen Rand des Sichtbereichs 17 befindlichen Lichtauskopplungsbereich 18 und einen sich an einem rechtsseitigen Rand des Sichtbereichs 17 befindlichen Lichtauskopplungsbereich 19. Die Lichtauskopplungsbereiche 11, 18 und 19 sind in Frontalansicht streifenförmig und erstrecken sich entlang eines größten Teils (mehr als 50%, insbesondere mehr als 75% der Länge) des benachbarten Rands des Sichtbereichs 17. Dadurch wird eine gute Ausleuchtung mit einem weiterhin ausreichend großen Blickfeld eines Nutzers in den Garraum 3 verbunden. Insbesondere kann so ein Blick auf einen in dem Garraum 3 befindlichen Gargutträger G ohne wesentliche Einschränkung gewährt werden.

Die Lichtauskopplungsbereiche 11, 18 und 19 sind von entsprechend geformten, etwas größeren nach Innen reflektierenden Beschichtungen 22 überdeckt. Die Lichtauskopplungsbereiche 11, 18 und 19 und die reflektierenden Beschichtungen 22 können z.B. von einer blickdichten Bedruckung (o. Abb.) auf der äußeren Sichtscheibe 7 überdeckt sein.

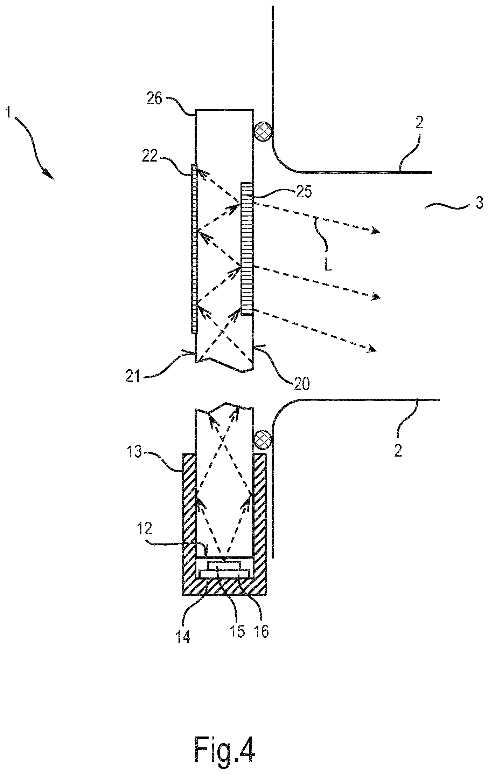

**Fig.4** zeigt eine Sichtscheibe 26 gemäß einem zweiten Ausführungsbeispiel, welche beispielsweise alternativ zu der Sichtscheibe 6 mit dem Backofen 1 verwendbar ist. Die Sichtscheibe 26 unterscheidet sich von der Sichtscheibe 6 dadurch, dass mindestens ein Lichtauskopplungsbereich 25 ein dem Garraum 3 zugewandter Oberflächenbereich ist, also bis zu der dem Garraum 3 zugewandten Oberfläche bzw. Seitenfläche 20 der Sichtscheibe 26 reicht. Der lichtstreuende Lichtauskopplungsbereich 25 wird hier vor allem durch Licht L beleuchtet, das von der vorderen Seitenfläche 21 abgestrahlt wird.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Auch kann eine Zahlenangabe genau die angegebene Zahl als auch einen üblichen Toleranzbereich umfassen, solange dies nicht explizit ausgeschlossen ist.

## Patentansprüche

1. Haushaltsgerät (1), aufweisend
- einen Behandlungsraum (3), der eine Beschickungsöffnung (4) aufweist, und
- eine Tür (5) zum Verschließen der Beschickungsöffnung (4), die mindestens eine Sichtscheibe (6; 26) aufweist, wobei
- die Sichtscheibe (6; 26) eine kantenseitig beleuchtete Haushaltsgeräte-Sichtscheibe (6; 26) ist und mindestens einen lichtstreuenden Lichtauskopplungsbereich (11, 18, 19; 25) aufweist,
**dadurch gekennzeichnet, dass**
- der mindestens eine lichtstreuende Lichtauskopplungsbereich (11, 18, 19, 25) ein gravierter Bereich ist, und
- die Sichtscheibe (6; 26) an einer dem Behandlungsraum (3) abgewandten Seite mindestens eine nach innen reflektierende Beschichtung (22) aufweist, die zumindest den mindestens einen Lichtauskopplungsbereich (11, 18, 19; 25) überdeckt.

2. Haushaltsgerät (1) nach Anspruch 1, **dadurch gekennzeichnet, dass** der mindestens eine Lichtauskopplungsbereich an einer dem Behandlungsraum abgewandten Seite mittels einer Sichtschutzeinrichtung blickdicht abgedeckt ist.

3. Haushaltsgerät (1) nach Anspruch 2, **dadurch gekennzeichnet, dass** die Sichtschutzeinrichtung eine Blende ist.

4. Haushaltsgerät (1) nach einem der vorhergehenden Ansprüche, **dadurch gekennzeichnet, dass** mindestens ein Lichtauskopplungsbereich (25) ein dem Behandlungsraum (3) zugewandter Oberflächenbereich ist.

5. Haushaltsgerät (1) nach einem der vorhergehenden Ansprüche, **dadurch gekennzeichnet, dass** mindestens ein Lichtauskopplungsbereich (11, 18, 19) ein im Inneren der Sichtscheibe (6) positionierter Bereich ist.

6. Haushaltsgerät (1) nach einem der vorhergehenden Ansprüche, **dadurch gekennzeichnet, dass** der mindestens eine Lichtauskopplungsbereich (11, 18, 19; 25) randseitig an einem Sichtbereich (17) der Haushaltsgeräte-Sichtscheibe (6; 26) angeordnet ist.

7. Haushaltsgerät (1) nach einem der vorhergehenden Ansprüche, **dadurch gekennzeichnet, dass** das Haushaltsgerät (1) ein Gargerät ist, welches als Behandlungsraum einen Garraum (3) aufweist, und die Sichtscheibe (6; 26) eine Scheibe einer Garraumtür (5) ist.

8. Haushaltsgerät (1) nach Anspruch 7, **dadurch gekennzeichnet, dass** die Sichtscheibe (6; 26) eine den Garraum (3) begrenzende innere Scheibe (6) eines mehrere Scheiben aufweisenden Scheibenpakets (6, 7) der Garraumtür (5) ist.

9. Haushaltsgerät (1) nach einem der vorhergehenden Ansprüche, **dadurch gekennzeichnet, dass** das Haushaltsgerät (1) mindestens eine Halbleiterlichtquelle (15) aufweist, deren Licht (L) in mindestens eine Kante (12) der Haushaltsgeräte-Sichtscheibe (6; 26) einstrahlbar ist.

10. Haushaltsgerät (1) nach den Ansprüchen 8 und 9, **dadurch gekennzeichnet, dass** das Licht (L) durch einen unteren Kantenabschnitt (12) in die innere Scheibe (6) eingekoppelt wird.

## Claims

1. Household appliance (1), having
- a treatment chamber (3), which has a loading opening (4), and
- a door (5) for closing the loading opening (4), which has at least one window (6; 26), wherein
- the window (6; 26) is a household appliance window (6; 26) which is illuminated at the edge and has at least one light-scattering light output region (11, 18, 19; 25),
**characterised in that**
- the at least one light-scattering light output region (11, 18, 19, 25) is an engraved region and
- the window (6; 26) has at least one inwardly reflecting coating (22) on a side facing away from the treatment chamber (3), said coating covering at least the at least one light output region (11, 18, 19; 25).

2. Household appliance (1) according to claim 1, **characterised in that** the at least one light output region is covered in an opaque manner on a side facing away from the treatment chamber by means of a vision protection device.

3. Household appliance (1) according to claim 2, **characterised in that** the vision protection device is a screen.

4. Household appliance (1) according to one of the preceding claims, **characterised in that** at least one light output region (25) is a surface region which faces the treatment chamber (3).

5. Household appliance (1) according to one of the preceding claims, **characterised in that** at least one light output region (11, 18, 19) is a region which is positioned in the inside of the window (6).

6. Household appliance (1) according to one of the preceding claims, **characterised in that** the at least one light output region (11, 18, 19; 25) is arranged at the edge of a field of vision (17) of the household appliance window (6; 26).

7. Household appliance (1) according to one of the preceding claims, **characterised in that** the household appliance (1) is a cooking appliance, which has a cooking chamber (3) as a treatment chamber, and the window (6; 26) is disc of a cooking chamber door (5).

8. Household appliance (1) according to claim 7, **characterised in that** the window (6; 26) is an inner disc (6), bounding the cooking chamber (3), of a disc packet (6, 7) of the cooking chamber door (5) which has a number of discs.

9. Household appliance (1) according to one of the preceding claims, **characterised in that** the household appliance (1) has at least one semiconductor light source (15), the light (L) of which can be irradiated into at least one edge (12) of the household appliance window (6; 26).

10. Household appliance (1) according to claims 8 and 9, **characterised in that** the light (L) is injected into the inner disc (6) through a lower edge portion (12).

## Revendications

1. Appareil ménager (1), comprenant
- un compartiment de traitement (3) pourvu d'une ouverture de chargement (4), et
- une porte (5) permettant de fermer l'ouverture de chargement (4) et qui comprend au moins une vitre (6 ; 26),
- la vitre (6 ; 26) étant une vitre d'appareil ménager éclairée sur le bord (6 ; 26) et
comprenant au moins une zone d'émission de lumière diffusante (11, 18, 19 ; 25), **caractérisé en ce que**
- l'au moins une zone d'émission de lumière diffusante (11, 18, 19, 25) est une zone gravée, et
- la vitre (6 ; 26) comprend au moins un revêtement réfléchissant vers l'intérieur (22) sur un côté opposé au compartiment de traitement (3), qui recouvre au moins l'au moins une zone d'émission de lumière (11, 18, 19 ; 25).

2. Appareil ménager (1) selon la revendication 1, **caractérisé en ce que** l'au moins une zone d'émission de lumière est recouverte de manière opaque sur une face opposée au compartiment de traitement par un dispositif pare-vue.

3. Appareil ménager (1) selon la revendication 2, **caractérisé en ce que** le dispositif pare-vue est un écran.

4. Appareil ménager (1) selon l'une des revendications précédentes, **caractérisé en ce qu'**au moins une zone d'émission de lumière (25) est une surface tournée vers le compartiment de traitement (3).

5. Appareil ménager (1) selon l'une des revendications précédentes, **caractérisé en ce qu'**au moins une zone d'émission de lumière (11, 18, 19) est une zone positionnée à l'intérieur de la vitre (6).

6. Appareil ménager (1) selon l'une des revendications précédentes, **caractérisé en ce que** l'au moins une zone d'émission de lumière (11, 18, 19 ; 25) est disposée sur le bord d'une zone de visualisation (17) de la vitre de l'appareil ménager (6 ; 26).

7. Appareil ménager (1) selon l'une des revendications précédentes, **caractérisé en ce que** l'appareil ménager (1) est un appareil de cuisson qui comprend un compartiment de cuisson (3) comme compartiment de traitement, et la vitre (6 ; 26) est une vitre d'une porte d'un compartiment de cuisson (5).

8. Appareil ménager (1) selon la revendication 7, **caractérisé en ce que** la vitre (6 ; 26) est une vitre intérieure (6) délimitant le compartiment de cuisson (3) d'un pack de vitres (6, 7) comportant plusieurs vitres de la porte du compartiment de cuisson (5).

9. Appareil ménager (1) selon l'une des revendications précédentes, **caractérisé en ce que** l'appareil ménager (1) comprend au moins une source lumineuse à semiconducteur (15), dont la lumière (L) peut être irradiée dans au moins un bord (12) de la vitre de l'appareil ménager (6 ; 26).

10. Appareil ménager (1) selon les revendications 8 et 9, **caractérisé en ce que** la lumière (L) est couplée dans la vitre intérieure (6) par une section de bord inférieur (12).
